# EUROPEAN PATENT APPLICATION

(11) **EP 4 632 324 A1**
(43) Date of publication of application: **15.10.2025**
(21) Application number: 24205331.2
(22) Date of filing: 08.10.2024
(51) Int. Cl.: G01C 21/16, G01C 21/20, H04W 4/02

(54) **VEHICLE HEADING DETERMINATION BASED ON SMARTPHONE LOCALIZATION**

(30) Priority: 10.04.2024 US 202418631739
(71) Applicant: Aptiv Technologies AG, 8200 Schaffhausen (CH)
(72) Inventor: Gnanasekaran, Bharat, Troy, 48098 (US); Spell, David, Troy, 48098 (US); Ruppel, Christopher, Troy, 48098 (US); Oman, Todd, Troy, 48098 (US)
(74) Representative: Lewis Silkin LLP

(57) **Abstract**

A heading determination system for determining heading of a vehicle (112) includes a connection module (412) configured to receive device heading information from a user device (120). The device heading information indicates a direction of movement of the user device (120). The heading determination system includes a movement determination module configured to, based on location information of the user device (120) measured by the vehicle, determine a relative device movement. The relative device movement indicates a direction of movement of the user device relative to the vehicle. The heading determination system includes a localization module (418) configured to determine the heading of the vehicle (112) based on the device heading information and the relative device movement, and transmit the heading of the vehicle to a control module (450) of the vehicle (112) to perform an action.

## Description

### FIELD

The present disclosure relates to vehicle navigation systems and more particularly to vehicle heading determination.

### BACKGROUND

Vehicle localization is essential for operation and navigation of vehicles, especially autonomous vehicles. For example, predicting and/or routing a path of an autonomous vehicle is dependent on accurate vehicle heading at start-up. Vehicle heading is often determined using a Global Navigation Satellite System (GNSS), such as the global positioning system (GPS), GLObalnaya NAvigatsionnaya Sputnikovaya Sistema (GLONASS), BeiDou Navigation System (BDS), Indian Regional Navigation Satellite System (IRNSS), Quasi-Zenith Satellite System (QZS), Galileo, etc. In an environment where a GNSS signal is weak or absent - such as in a parking garage, underground roadway, tunnel, etc. - accurate vehicle heading is difficult to ascertain. Prompts, visual and vocal, are highly dependent on the path prediction. Heading of an object/device is the direction, relative to north (for example, true north or magnetic north), in which the object/device is pointing at any given moment. As another example, navigation systems require accurate heading to provide accurate routing directions and prompts (e.g., visual prompts, voice prompts) to the driver of the vehicle.

The vehicle may include a GNSS receiver as a part of one or more of a telematics module, a navigation radio, or a positioning module that receives localization information from a satellite. The vehicle heading is calculated using algorithm(s) dependent on motion of the vehicle. Upon turning on the ignition of the vehicle (sometimes referred to as a key-on or ignition-on event), one or more previously stored headings is retrieved. The heading may be continuously calculated and stored while driving, so the stored heading may represent the last known heading prior to ignition shutdown. This stored heading may be used initially. Once a vehicle begins moving and a GNSS system of the vehicle acquires satellite signals, the heading is derived from the GNSS system. If the vehicle remains motionless, the GNSS system may not be able to determine heading without costly hardware such as a dual-receiver GNSS system. Even a dual-receiver GNSS system requires open-sky environments where GNSS signals are strong and uninterrupted.

Further, the previously stored heading may be incorrect, such as when the vehicle lost its GNSS signal upon entering a GNSS-denied environment or when the vehicle was moved while the ignition was turned off. Corruption or loss of the navigation system memory can also cause the previous heading to be unavailable when starting up the vehicle.

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

A heading determination system for determining heading of a vehicle includes a connection module configured to receive device heading information from a user device. The device heading information indicates a direction of movement of the user device. The heading determination system includes a movement determination module configured to, based on location information of the user device measured by the vehicle, determine a relative device movement. The relative device movement indicates a direction of movement of the user device relative to the vehicle. The heading determination system includes a localization module configured to determine the heading of the vehicle based on the device heading information and the relative device movement, and transmit the heading of the vehicle to a control module of the vehicle to perform an action.

In other features, the device heading information is defined with respect to at least one of magnetic north and true north. The heading of the vehicle is defined with respect to at least one of the magnetic north and the true north. In other features, the relative device movement of the user device includes a current zone of a plurality of zones around the vehicle. The current zone indicates an area outside of the vehicle that the user device is located within. In other features, zones of the plurality of zones are at least one of non-overlapping or sectors of a circle having a center at a point of the vehicle. In other features, the movement determination module is configured to identify a prior zone of the plurality of zones for the user device based the location information of the user device. The prior zone indicates an area outside of the vehicle that the user device was located within prior to entering the current zone. The localization module is configured to determine the heading of the vehicle based on the device heading information and a movement direction of the user device. The movement direction is calculated based on the prior zone and the current zone.

In other features, the location information includes a plurality of user device locations at a corresponding plurality of times. The device heading information includes a plurality of user device headings at the corresponding plurality of times. In other features, the relative device movement is an angle of movement of the user device relative to a specified axis of the vehicle (for example, the axis running along the center of the vehicle and pointing forward). In other features, the movement determination module is configured to trilaterate at least two locations of the user device at two times relative to a known point on the vehicle to determine the direction of movement of the user device. In other features, law of cosines is used to trilaterate the at least two locations of the user device and the known point on the vehicle. In other features, the connection module includes a Bluetooth transceiver configured to receive the device heading information from the user device. In other features, the location information of the user device is measured by radio frequency communication between the user device and a transceiver of the vehicle. In other features, the transceiver includes an ultra-wideband transceiver.

In other features, the movement determination module is configured to determine the relative device movement for the user device in response to the user device being within a threshold distance of the transceiver. In other features, the movement determination module is configured to determine the relative device movement based on radio frequency communications between the user device and a corresponding plurality of transceivers of the vehicle. In other features, the control module includes a navigation module configured to determine a navigation path for the vehicle based on the heading of the vehicle. In other features, the control module includes an autonomous driving module configured to plan a driving path for the vehicle based on the heading of the vehicle. In other features, the localization module is configured to determine the heading of the vehicle based on (i) an orientation of the vehicle relative to a fixed beacon and (ii) a known position of the fixed beacon.

A method for determining heading of a vehicle includes receiving device heading information from a user device. The device heading information indicates a direction of movement of the user device. The method includes based on location information of the user device measured by the vehicle, determining a relative device movement. The relative device movement indicates a direction of movement of the user device relative to the vehicle. The method includes determining the heading of the vehicle based on the device heading information and the relative device movement. The method includes transmitting the heading of the vehicle to a control module of the vehicle to perform an action.

In other features, the relative device movement includes at least one of a current zone of a plurality of zones around the vehicle; or an angle of movement of the user device relative to an axis of the vehicle.

A non-transitory computer-readable medium includes instructions including receiving device heading information from a user device. The device heading information indicates a direction of movement of the user device. The instructions include, based on location information of the user device measured by the vehicle, determining a relative device movement. The relative device movement indicates a direction of movement of the user device relative to the vehicle. The instructions include determining the heading of the vehicle based on the device heading information and the relative device movement. The instructions include transmitting the heading of the vehicle to a control module of the vehicle to perform an action.

In other features, the instructions include trilaterating at least two locations of the user device at two times relative to the vehicle to determine the direction of movement of the user device.

Further areas of applicability of the present disclosure will become apparent from the detailed description, the claims, and the drawings. The detailed description and specific examples are intended for purposes of illustration only and are not intended to limit the scope of the disclosure.

### BRIEF DESCRIPTION OF THE DRAWINGS

The present disclosure will become more fully understood from the detailed description and the accompanying drawings.
FIG. 1 is an example visualization of vehicle heading determination based on defined zones around the vehicle according to aspects of the present disclosure.
FIG. 2 is an example visualization of vehicle heading determination based on user device trilateration according to aspects of the present disclosure.
FIG. 3 shows an example visualization of the concept of activation ranges for vehicle heading determination according to aspects of the present disclosure.
FIG. 4 illustrates an overview of an architecture for determining vehicle heading according to aspects of the present disclosure.
FIGS. 5A-5B illustrate block diagrams of example implementations of the vehicle localization system for determining vehicle heading according to aspects of the present disclosure.
FIG. 6 illustrates a first computer-implemented method for determining vehicle heading according to aspects of the present disclosure.
FIG. 7 illustrates a second computer-implemented method for determining vehicle heading according to aspects of the present disclosure.

In the drawings, reference numbers may be reused to identify similar and/or identical elements.

### DETAILED DESCRIPTION

### INTRODUCTION

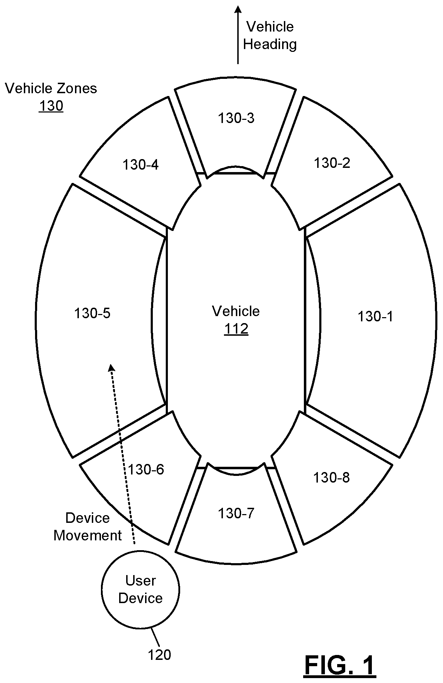

FIG. 1 is an example visualization of the concept underlying determination of vehicle heading based on headings and zones of a user device according to aspects of the present disclosure. A vehicle 112 can be configured to determine its heading based on location and heading information received from a user device 120 (such as a driver's smartphone) without reliance on internal GNSS systems. The heading of an object, such as the vehicle 112 or the user device 120, can be a localization of the object with respect to magnetic north or true north. The vehicle 112 may be an autonomous vehicle, a semi-autonomous vehicle, a car, a robot, a drone, a boat, a motorcycle, or any other object/device that requires heading information to perform actions, such as navigation, prompt generation, autonomous driving, semi-autonomous driving, etc. The vehicle 112 can determine its heading based at least in part on an understanding of zones around the vehicle and movement information of the user device 120, including heading and location of the user device 120.

The user device 120 includes heading software, such as a compass application, that determines the heading of the phone. The user device 120 also includes a communication application that is capable of reliably and securely transmitting the heading information to the vehicle 112. This software may be supplied by a manufacturer of the user device 120 (such as in an operating system or preinstalled app), supplied by a third-party (such as through a distributed distribution platform, such as an app store), or a combination.

The vehicle 112 may include a datastore defining the vehicle zones 130 around the outside of the vehicle 112. In various implementations, the vehicle zones 130 are non-overlapping and each cover a predefined area around the vehicle 112. In some examples, the area can be defined using physical distance (e.g., 2 meters) and direction relative to the vehicle 112. In some example embodiments, the vehicle zones 130 can be defined as sectors of a circle and/or an oval having a center at a point of the vehicle, and a radius equal to the physical distance. As shown in FIG. 1, the vehicle zones 130 can include some or all of a passenger zone 130-1, a passenger front zone 130-2, a front zone 130-3, a driver front zone 130-4, a driver zone 130-5, a driver rear zone 130-6, a rear zone 130-7, and a passenger rear zone 130-8. Each of the vehicle zones 130 are defined as an area surrounding the outside of the vehicle 112 and a direction relative to the vehicle 112. In some embodiments, the direction may include angles or angular ranges with respect to the vehicle 112 covered under the zone (e.g., 0 degrees, 15 degrees, 30 degrees, 0-30 degrees, 31-60 degrees, etc.). The vehicle zones 130 in FIG. 1 are provided only as an example to illustrate the types of zones that can be defined and used to determine heading of the vehicle 112, in conjunction with a heading (relative to, for example, due North) of the user device.

In various implementations, other zones in addition to or as replacement are used. For example, a set of 24 zones (each subtending approximately 15 degrees), may be defined. In various implementations, the size of the zones may vary: for example, zones to the side of the vehicle may have a wider angle than zones to the front of the vehicle, or vice versa.

The vehicle 112 can localize itself based on device movement of the user device 120 and the definition of the vehicle zones 130. The vehicle 112 may determine the device movement of the user device 120 based on a device heading of the user device 120 and vehicle zones consecutively entered (or predicted to be entered) by the user device 120. The device heading may be a compass heading of the user device 120 as communicated by the user device 120 to the vehicle 112. The compass heading may be defined as a direction of movement of the user device 120 relative to due north. The vehicle 112 can identify the zones entered (or predicted to be entered) by the user device 120 based on user device locations relative to the vehicle 112 at multiple consecutive times. In some examples, the user device 120 may communicate the user device locations to the vehicle 112 via their respective communication devices communicating using radio waves. In other examples, the vehicle 112 may determine the relative locations of the user device based on calculating a time-of-flight (ToF) between a transceiver of the vehicle 112 and a transceiver of the user device 120 communicating via short-range radio waves.

The vehicle 112 can detect the zones through which the user device 120 consecutively transitioned based on triangulating consecutive device locations and the zone definitions. For example, the vehicle 112 may determine the device movement as the user device 120 transitions from the driver rear zone 130-6 to the driver zone 130-5 based on the previous consecutive device locations. The vehicle 112 can then predict the vehicle heading based on the vehicle zone transited by the device and the device heading (that is, with respect to a reference heading, such as due North).

Using the illustration in FIG. 1 as an example, assume that the user device 120 is moving along the dashed line and determines that its compass heading for this movement is West. The user device 120 transmits this compass heading to the vehicle 112 repeatedly (for example, at a fixed periodicity). If the user device 120 is transmitting a movement heading of West as the user device transitions from driver rear zone 130-6 to driver zone 130-5, the vehicle 112 can determine that its heading is approximately West as well.

In some implementations, an approach angle may be defined for each of the vehicle zones 130. For example, the approach angle may be defined with respect to the vehicle heading (that is, a vector pointing forward from the vehicle defines 0°): in this example, the approach angle for the rear zone 130-7 is 0° (because the user would be approaching the vehicle 112 in a direction that is the same as the forward vector), the approach angle for the front zone 130-3 is 180° (because the user would be approaching in a direction that is opposite of the forward vector), the approach angle for the driver rear zone 130-6 is 45°, the approach angle for the driver zone 130-5 is 90°, the approach angle for the driver front zone 130-4 is 135°, etc. If the user device 120 is approaching the vehicle in line with one of these zones, the approach angle can be subtracted from the movement heading reported by the user device 120.

As a numeric example, consider the user device 120 reporting a movement heading of true North (0°) as the user device 120 is approaching the vehicle 112 along the driver front zone 130-4. The heading of the vehicle 112 can be approximated by subtracting the approach angle corresponding to that zone (135°) from the reported heading (0°) of the user device 120. The result is -135°, which is equivalent to 225° (Southwest).

In some implementations, a transition angle may be defined for a transition between each pair of adjacent vehicle zones. The transition angle indicates the movement direction with respect to the vehicle. For example, consider the user device 120 reporting a heading of East (90°) as the user device transitions from the driver rear zone 130-6 to the driver zone 130-5 while the 90° angle reported by the user device 120 is a compass angle, The vehicle heading (that is, the angle of the forward vector with respect to magnetic North) can be determined by subtracting the transition angle from the heading of the user device 120 (90°), which is equivalent to 100° or East-Southeast.

In this way, the vehicle localization system can determine a vehicle heading prior to driving based on localization information of a user device, and without reliance on a GNSS signal. This results in a robust and more accurate heading determination and lower system cost for the vehicle 112.

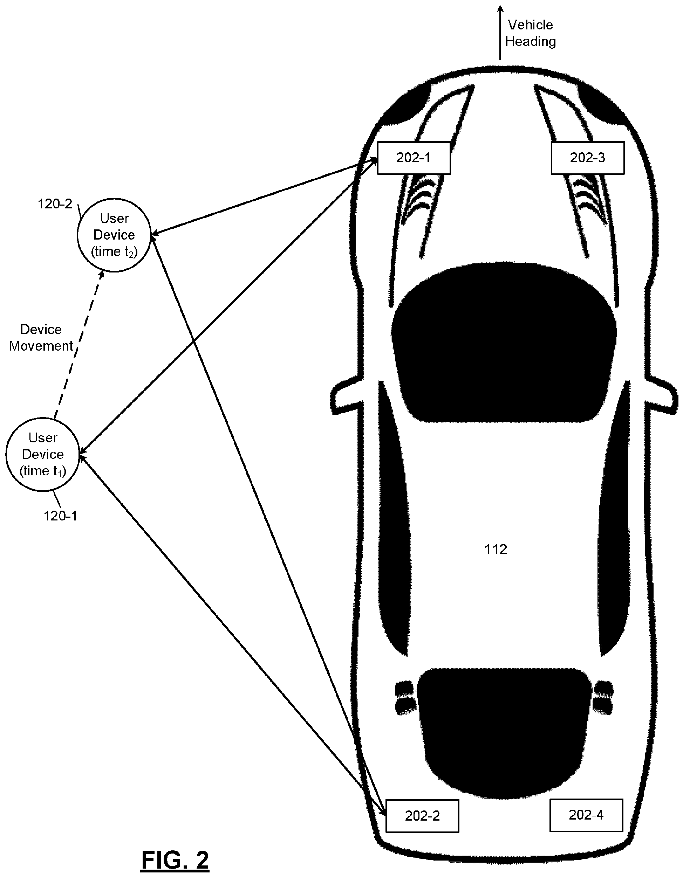

FIG. 2 is an example visualization of vehicle heading determination according to aspects of the present disclosure. The heading for the vehicle 112 can be estimated based on (i) the reported heading of the user device 120 as the user carrying the user device 120 approaches the vehicle 112 and (ii) a measurement of the relative angle of movement of the user device 120 with respect to the vehicle 112.

In various implementations, the vehicle 112 (or a control system or component thereof) tracks location and heading of the user device 120 over time. As illustrated in FIG. 2, the location 120-1 of user device 120 at a first time (i.e., t₁) and the location 120-2 of user device 120 at a second time (i.e., t₂) can be determined relative to the vehicle 112 and the relative angle of movement (relative to the vehicle 112) of the user device 120 can therefore be determined based on the Law of Cosines. When the user device 120 reports a compass heading of movement, this compass heading can be combined with the relative angle of movement to determine the heading of the vehicle 112.

As shown in FIG. 2, the vehicle 112 can be equipped with one or more communication devices. In the example of FIG. 2, the vehicle 112 is depicted with a communication device 202-1, a communication device 202-2, a communication device 202-3, and a communication device 202-4 (collectively, communication devices 202) configured for short-range communication. In various implementations, the vehicles 112 is equipped with two communication devices 202, four communication devices 202, or some other number of communication devices 202 greater than or equal to one. Even though the vehicle 112 of FIG. 2 shows four communication devices 202 at the four corners of the vehicle 112, this is for illustration purposes only and any number of communication devices may be adapted to the vehicle 112 at various locations on or within the vehicle 112.

Each of the communication devices 202 is configured to communicate with other short-range communication devices to share data and/or to locate the other short-range communication devices. In some examples, the communication devices 202 may be ultra-wideband ("UWB") transceivers (e.g., radios, sensors, beacons, etc.) adapted to the vehicle 112. In another example, the communication devices 202 may be Bluetooth low-energy ("BLE") transceivers adapted to the vehicle 112. In yet another example, some of the communication devices 202 may be UWB transceivers while others are BLE transceivers. Other sensors may include inertial measurement units, cameras, etc.

Each of the communication devices 202 may be a transceiver configured to detect other communication devices with a certain operating range, such as within 5 to 10 meters. For example, the communication devices 202 may be configured to detect and/or communicate with a communication device (e.g., BLE transceiver, UWB transceiver, etc.) adapted to or located within the user device 120 and/or other similar devices.

In some example embodiments, each of the communication devices 202 is a transceiver that detects/communicates via high-frequency radio waves. The communication devices 202 are configured to detect an object, such as, but not limited to, the user device 120, to get the object's location and distance relative to the communication device 202 at one or more times. In order to determine the location and distance, the one or more of the communication devices 202 may be configured to receive signal(s) from a user device 120 when the user device 120 is within a certain threshold distance of the communication device 202. The threshold distance may be an activation range (e.g., 5 meters, 10 meters, etc.) of the communication device 202 or may be within a certain distance of the communication device 202 or the vehicle that is shorter than the activation range of the communication device 202. The user device 120 may include a communication device that is configured to communicate (e.g., transmit, receive, etc.) with one or more of the communication devices 202 of the vehicle 112. This communication may work while the user device 120 is within a threshold distance of the vehicle 112. In some embodiments, the communication device 202 may request and receive location information for the user device 120 via the connection.

In other embodiments, the vehicle 112 may determine location and distance information of the user device 120 at multiple times. For example, upon detecting a communication device of the user device 120 within the threshold distance of the communication device 202, the communication device 202 can be configured to calculate a time of flight (ToF) between itself and the communication device of the other device. The ToF is calculated as the roundtrip time of request and response packets/signals from and to the communication device 202. In some examples, the communication device 202 may track the movement of the user device 120 in real-time by communicating with the communication device of the user device 120. In this way, the communication device 202 can also determine whether the user device 120 is stationary, moving closer, or moving away from the communication device 202.

As shown in FIG. 2, two communication devices (i.e., communication device 202-1 and communication device 202-2) of the vehicle 112 may determine the location (i.e., position) of the user device 120 at a first and a second time (i.e., t₁ and t₂) as location 120-1 and location 120-2 relative to each of the two communication devices 202-1 and 202-2. For each of the communication devices 202, the vehicle 112 may trilaterate the two locations of the user device 120 with the corresponding one of the communication devices 202. For example, the law of cosines can be used to determine the angle of device movement based on the two locations of the user device 120 and the corresponding one of the communication devices 202.

While FIG. 2 shows the same device movement and respective calculated locations of the user device 120 by the communication devices 202-1 and 202-2, which have different locations on the vehicle 112. In various implementations, each of the communication devices 202 can determine an angle of the user device 120 with respect to themselves, and these multiple distance measurements can be used to trilaterate position of the user device 120 with respect to a vehicle 112 (specifically, a reference point on the vehicle 112, which may be a center of the vehicle 112, a center of the front bumper of the vehicle 112, etc.). In other implementations, each of the communication devices 202 may also be able to determine a range of the user device 120 with respect to themselves, from which each of the communication devices 202 can calculate a position of the user device 120 relative to the vehicle 112. In such cases, the vehicle 112 may average the individually determined positions from the communication devices 202 to improve accuracy. The average may account for variations in time-of-flight calculations among the communication devices 202. Similarly, both of the communication devices 201-1 and 202-2 may calculate device locations at different times and/or intervals. The resulting device movements may be aggregated to determine the final device movement of the user device 120.

By trilaterating the locations of the user device 120 relative to the two communication devices 202-1 and 202-2, the vehicle 112 may determine the device movement (e.g., movement direction, distance travelled, etc.) of the user device 120 as it approaches the vehicle 112. This is only an example to illustrate how a device movement a user device 120 can be calculated based on location information of user device 120. It may be possible that the vehicle 112 uses more than two instances of user device locations. It may also be possible that only one or more than two of the communication devices 202 of the vehicle 112 are used to determine the device movement of the user device 120.

The vehicle 112 can then extrapolate the device movement of the user device 120 to determine an angle of movement of the user device 120 relative to the vehicle 112 along which the user device 120 is approaching. The heading of vehicle 112 is calculated from one or more measurements of the relative angle of movement and one or more reports by the user device 120 of compass heading.

The user device 120 may be sharing its heading information over time once it is within a threshold distance of a corresponding communication device of the vehicle 112. This communication device may be the same or different from the communication devices 202 shown in FIGS. 2. User device heading defines/indicates a direction in which the user device 120 is pointing or moving relative to true north. In some embodiments, the heading may be determined as an angular distance relative to true north, where true north heading is at zero degrees and/or may be defined as magnetic or compass direction of the user device.

The heading(s) of the user device 120 and the relative angle(s) of movement of the user device 120 can be used to determine the heading of the vehicle 112, as described above with respect of FIG. 2. In some embodiments, the vehicle 112 may use heading(s) of the user device with respect to the same times as the locations of the user device 120 used to determine the device movement. In this way, the current heading of the vehicle 112 can be determined prior to driving the vehicle 112, and without reliance on a strong satellite connection via GNSS receiver, resulting in a robust and more accurate heading determination and lower system cost for the vehicle 112.

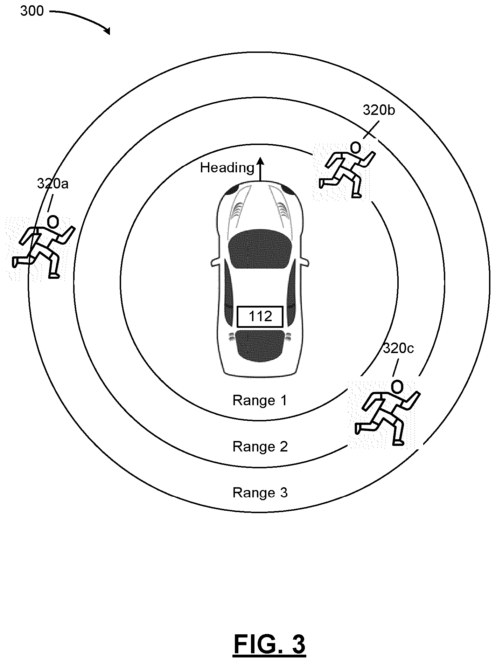

FIG. 3 is an example visualization of the concept of activation ranges 300 of the vehicle 112 for vehicle heading determination according to aspects of the present disclosure. A communication device, such as those described with respect to FIGS. 1 and 2, can be associated with an activation range. An activation range is an area surrounding the vehicle 112 that determines whether the communication device may initiate a communication with a user device. For example, a communication device (e.g., Bluetooth low-energy transceiver) of the vehicle may be associated with "Range 3". Range 3 may be defined by a first threshold distance (e.g., 80 meters, etc.). The vehicle 112's communication device may be configured to, upon detecting that a user device equipped with a communication device that can communicate with the vehicle 112's communication device is within the first threshold distance of the communication device of the vehicle 112, establish a connection with the communication device of the user device. For example, if a paired smartphone enters Range 3 of a Bluetooth low energy sensor adapted to the vehicle 112, a Bluetooth low-energy sensor of the smartphone may establish a communication with the Bluetooth low-energy sensor of the vehicle 112 or vice versa when the Bluetooth low-energy sensor of the smartphone is within 80 meters of the sensor of the vehicle 112. In some example embodiments, the threshold distance may be predetermined and shorter than the activation range of the communication device of the vehicle 112.

A control system/module/application of the user device 120 may be configured to determine the heading direction of the user device using internal heading determination module(s) (e.g., GNSS, inbuild sensors, magnetometer, camera, gyroscope, accelerometer, etc.) once the connection has been established. The user device may then share the heading direction information with the vehicle 112 via the established connection at a periodic rate (e.g., every 1000 milliseconds, every 100 milliseconds, etc.). For example, upon a user with a user device 320a entering Range 3, the vehicle 112 or the user device 320a may establish a connection with the other via their corresponding communication devices. The user device 320a may then begin determining and sharing the heading direction of the user device 320a to the vehicle 112 via the connection at a periodic rate.

A "Range 2" may be defined such that once a user device is within a second threshold distance of the vehicle 112, a localization system of the vehicle 112 is configured to begin localizing the user device with respect to the vehicle 112. Range 2 may be an activation range (e.g., 5 meters, 10 meters, etc.) of a second communication device of the vehicle 112, such as an ultra-wideband sensor, or may be predefined by the localization system as a shorter radius than the activation range. The localization system may begin measuring the ToF of signals transmitted to and returned by the user device 120 using one or more of the communication devices 202 described with respect to FIG. 2. The localization system may then localize the user device's final device movement relative to the vehicle.

For example, upon a user with a user device 320c entering Range 2, one or more communication devices of the vehicle 112 may establish a connection with the user device 320c. The localization system of the vehicle 112 may then begin localizing the user device's final device movement relative to the vehicle (e.g., angle of movement, vehicle zones, etc.) as described in embodiments of the disclosure.

Further, the localization system of the vehicle 112 may also define "Range 1" that includes the vehicle zones of the vehicle 112. The localization system may determine the current heading/orientation of the vehicle 112 based on the heading direction history of the user device and the device movement as the user device is or will be approaching the vehicle 112 within Range 1. In an example illustration in FIG. 3, a user device 320b can be located within Range 1. The localization system of the vehicle 112 may continue calculating vehicle heading until the user device is within a vehicle envelope, at which point, the localization system of the vehicle 112 may stop receiving heading information form the user device 120 and determine a final heading of the vehicle 112. The vehicle envelope may be predefined and can include all locations within the vehicle 112 and within a certain envelope outside the vehicle. For example, this envelope may be defined as a simple circle with a radius and a center point within the vehicle. In various implementations, the envelop may be the same as a remote keyless entry range.

In certain locations, infrastructure beacons may be present for assisting vehicles and other devices with localization. One or more infrastructure beacons may be installed in areas with limited GNSS signals, such as tunnels, basements, and enclosed parking garages. The location of an infrastructure beacon is determined by the localization system, for example by consulting a centralized database and/or by receiving location information encoded in transmissions from the infrastructure beacon. A vehicle (or other device, such as a mobile phone) can determine its position and - using multiple readings, multiple sensors, or multiple beacons - heading with respect to the infrastructure beacons. This location information can be used to supplement or replace the other device-assisted localization described in this disclosure.

### SYSTEM OVERVIEW

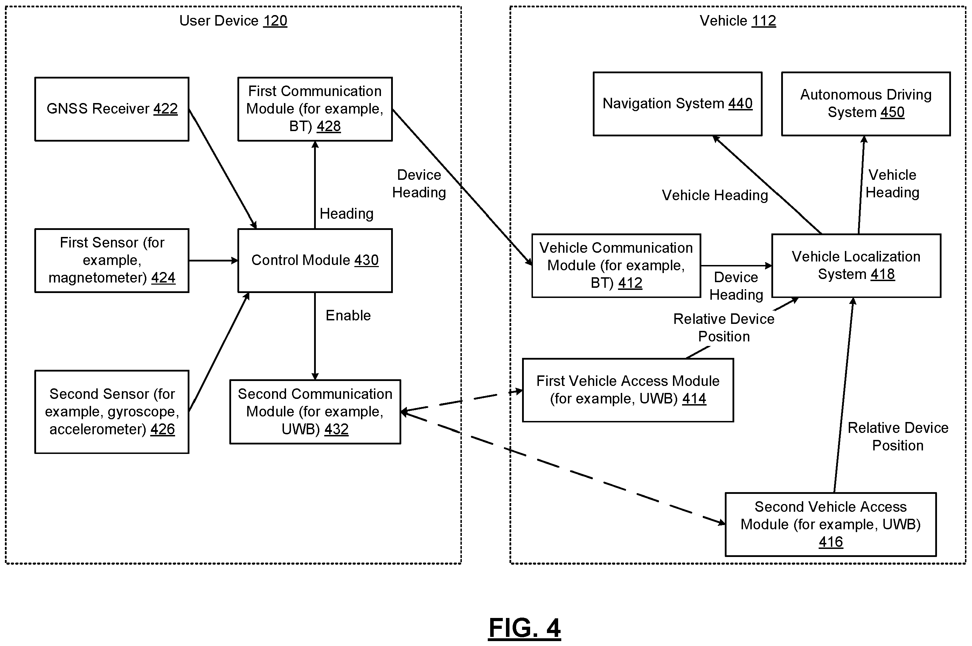

FIG. 4 shows an overview of an architecture for determining vehicle heading according to aspects of the present disclosure. The vehicle 112 may determine its heading based on heading and location of the user device 120. The vehicle 112 includes a vehicle communication module 412, a first vehicle access module 414, a second vehicle access module 416, a vehicle localization system 418, a navigation system 440, and an autonomous driving system 450. Other embodiments of the vehicle 112 may include more or fewer vehicle access devices. Some embodiments may include only one of the navigation system 440 and the autonomous driving system 450. One or more components of the vehicle 112 may be configured to communicate with the user device 120 and/or components thereof to receive signals, location information, and/or heading information of the user device 120.

The user device 120 may be a handheld device that is capable of communicating with other devices using short range transceivers (e.g., radio, sensors, beacons, etc.), such as ultrawideband sensors, Bluetooth low-energy sensors, etc. For example, the user device 120 may be a smartphone, a tablet, a laptop, a gaming console, an artificial/virtual reality device, a key fob, a wearable device such as a smartwatch, etc. The user device 120 is configured to detect and communicate with at least one communication device of the vehicle 112, such as the vehicle communication module 412, the first vehicle access module 414, and the second vehicle access module 416. The user device 120 includes a GNSS receiver 422, a first sensor 424, a second sensor 426, a control module 430, a first communication module 428 and a second communication module 432. It should be noted that the user device 120 may include more than one sensor, and more or less than two communication devices shown in FIG. 4.

The first communication module 428 may include a BLE transceiver that is configured to detect and communicate with the vehicle communication module 412 of the vehicle 112. The vehicle communication module 412 may include a short-range communication device, such as a BLE transceiver, that is configured to establish a connection and communicate with other short-range communication devices, such as the first communication module 428 of the user device 120, via radio waves at a set of frequencies. Upon the user device 120 being within a threshold distance, such as an activation range, of the vehicle 112, the vehicle communication module 412 may establish a connection or accept a connection request from the first communication module 428 of the user device 120. The threshold distance may be the connection range of the first communication module 428, the connection range of the vehicle communication module 412, or smaller than both of the aforementioned ranges. In some example embodiments, the first communication module 428 may establish a connection with the vehicle communication module 412 prior to the user device 120 being within the threshold distance of the vehicle 112 upon the user device 120 being within the shorter of the connection range of the first communication module 428 and the connection range of the vehicle communication module 412.

The vehicle communication module 412 may request and the first communication module 428 may provide user device heading information via the connection. The first communication module 428 may send user device heading information at set intervals. The first communication module 428 receives the user device heading information from the control module 430 configured to determine the heading of the user device 120 at any given time.

The control module 430 may determine the user device heading based on information received from the GNSS receiver 422, the first sensor 424 and/or the second sensor 426. The GNSS receiver 422 of the user device 120 may be configured to determine a location and heading of the user device 120. The first sensor 424 and/or the second sensor 426 may include sensors, such as a magnetometer, a compass, a gyroscope, an accelerometer, or a combination thereof, configured to determine motion and magnetic north information of the user device 120 that can be combined with the output of the GNSS receiver 422 to determine the actual heading of the user device 120 at any given time.

For example, a gyroscope may determine axis-based motion of the user device 120, including speed and direction. The output of the gyroscope can be combined with an available heading information provided by the GNSS receiver to determine a heading of the user device 120. Similarly, a gyroscope, or a combination of a gyroscope with an accelerometer (such as an inertial measurement unit), can provide more precise motion of the user device 120 when the user device 120 is moving in a smaller motion (e.g., tilting). The magnetometer can measure magnetic fields to determine the magnetic north by varying its voltage output to the user device 120 or using a digital communications interface. The control module 430 is configured to determine the heading of the user device 120 based on a combination of the available location, heading, motion, and/or magnetic north information received from the GNSS receiver 422, the first sensor 424, and/or the second sensor 426. While FIG. 4 shows the first sensor 424 and the second sensor 426, more than two sensors may be included in the user device 120 and outputs thereof may be used by the control module 430 to determine the user device heading at any given time. The control module 430 may receive information from the GNSS receiver 422, the first sensor 424, and the second sensor 426 and determine the user device heading at regular time intervals (e.g., every 1000 milliseconds, every 100 milliseconds, etc.).

The user device 120 may further include a second communication module 432 configured to receive and send signals to a first vehicle access module 414 and a second vehicle access module 416 of the vehicle 112. While FIG. 4 shows a first communication module 428 and a second communication module 432, the first communication module 428 may be configured to perform the steps of the second communication module 432. The first vehicle access module 414, the second vehicle access module 416 and the second communication module 432 may each include a short-range communication device, such as a BLE (with an 80-meter activation range) or a UWB (with a 5-10 meter activation range) transceiver, that is configured to establish a connection and communicate with other short-range communication devices. Each of the first vehicle access module 414 and the second vehicle access module 416 are configured to, upon the user device 120 being within a threshold distance of corresponding the first vehicle access module 414 and the second vehicle access module 416: (i) establish a connection with the second communication module 432 and (ii) determine relative device locations of the user device 120 indicating a position (i.e., location) of the user device relative to the first vehicle access module 414 and the second vehicle access module 416 using the process described with respect to FIG. 2. The first vehicle access module 414 and the second vehicle access module 416 may determine the relative device locations at regular time intervals (e.g., every 1000 milliseconds, every 100 milliseconds, etc.).

The vehicle communication module 412 is configured to request and/or receive the user device headings from the first communication module 428, and provide the device headings with corresponding times to the vehicle localization system 418 for processing. The vehicle localization system 418 is configured to receive the device headings with corresponding times (e.g., a current device heading, a previous device heading, etc.) as historical/repeated device heading information from the vehicle communication module starting when the user device is within the first communication range of the vehicle, and the relative device locations with associated times as historical/repeated relative device location information from the first vehicle access module 414 and the second vehicle access module 416 starting when the user device is within the second communication range of the vehicle. The vehicle localization system 418 is configured to determine the vehicle heading based on the historical/repeated device heading information and the historical/repeated relative device location information. The vehicle localization system 418, in some example embodiments, may be configured to generate the vehicle headings until the user device 120 is at or within an envelope of the vehicle 112.

The vehicle localization system 418 is configured to provide the vehicle heading to the navigation system 440 and/or the autonomous driving system 450 of the vehicle 112 for performing an action(s). The navigation system 440 may be configured to use the vehicle heading as an input to determine routing direction and time for navigating the vehicle 112 to a desired destination, and generate associated voice or visual prompts to provide a user of the vehicle 112 to navigate the vehicle 112. The autonomous driving system 450 may be configured to predict a driving path for the vehicle 112 - including directions for moving the vehicle through traffic and infrastructure - which may ultimately be used by a control system of the vehicle 112 to autonomously drive the vehicle 112.

### VEHICLE LOCALIZATION SYSTEM

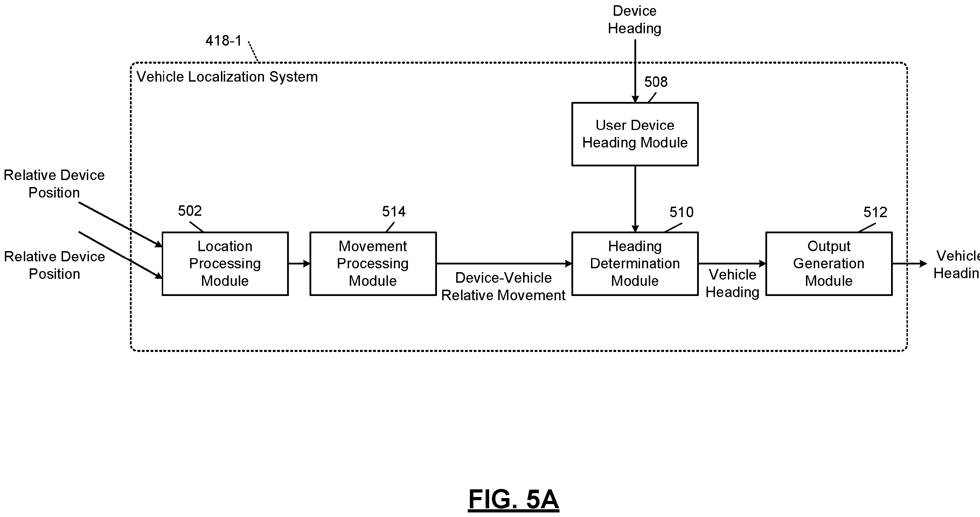

FIG. 5A is an example implementation of the vehicle localization system 418 (i.e., vehicle localization system 418-1) for determining vehicle heading according to aspects of the present disclosure. The vehicle localization system 418-1 is configured to receive relative device position information from the first vehicle access module 414 and the second vehicle access module 416, and the device heading information from the vehicle communication module 412. The vehicle localization system 418-1 and/or components thereof are configured to use the inputs to determine the vehicle heading of the vehicle 112. The vehicle localization system 418-1 may include one or more of a location processing module 502, a movement processing module 514, a user device heading module 508, a heading determination module 510, and an output generation module 512.

The location processing module 502 receives as input the relative device positions and is configured to output device position information for the user device 120. For example, if the relative device positions are known from ToF, ranging etc., the location processing module 502 may use trilateration to determine a position of the user device 120. If the relative device positions are angles and distances, the location processing module 502 may geometrically calculate the relative positions of the user device 120 with respect to each of the vehicle access modules 414 and may use other mathematical techniques (such as averaging) to improve accuracy.

The movement processing module 514 is configured to determine a movement of the user device 120 with respect to a frame of reference of the vehicle 112 based on movement over time of the user device 120. The movement processing module 514 may use the law of cosines to determine an angle of movement of the user device 120 based on subsequent relative device position determinations.. The movement processing module 514 provides the determined device-vehicle relative movement (specifically, the angle of movement with respect to the frame of reference of the vehicle 112) to the heading determination module 510 for use in determining the heading for the vehicle 112.

The user device heading module 508 may receive device heading information from the vehicle communication module 412. The user device heading module 508 may process the device heading information to determine repeated heading information including a sequence of headings with corresponding times for the user device 120 starting from when the communication is established between the first communication module 428 and the vehicle communication module 412. The heading determination module 510 may also receive the determined angle of movement from the movement processing module 514. In one example embodiment, the heading determination module 510 can determine the vehicle heading based on the repeated heading information (i.e., a set of headings over time received prior to the determination) and the angle of movement of the user device 120.

The output generation module 512 may use the vehicle heading determined by the heading determination module 510 for processing and conversion to a required format (e.g., compass, degrees, etc.) usable by the navigation system 440 and/or the autonomous driving system 450. For example, the heading required by the navigation system 440 may be in the form of compass heading, and the output generation module 512 may convert the vehicle heading into compass heading. As another example, the autonomous driving system 450 may require the vehicle heading to be in approximate degrees (e.g., 180 degrees, 360 degrees, etc.) due north, and the output generation module 512 may convert the vehicle heading to approximate degrees due north.

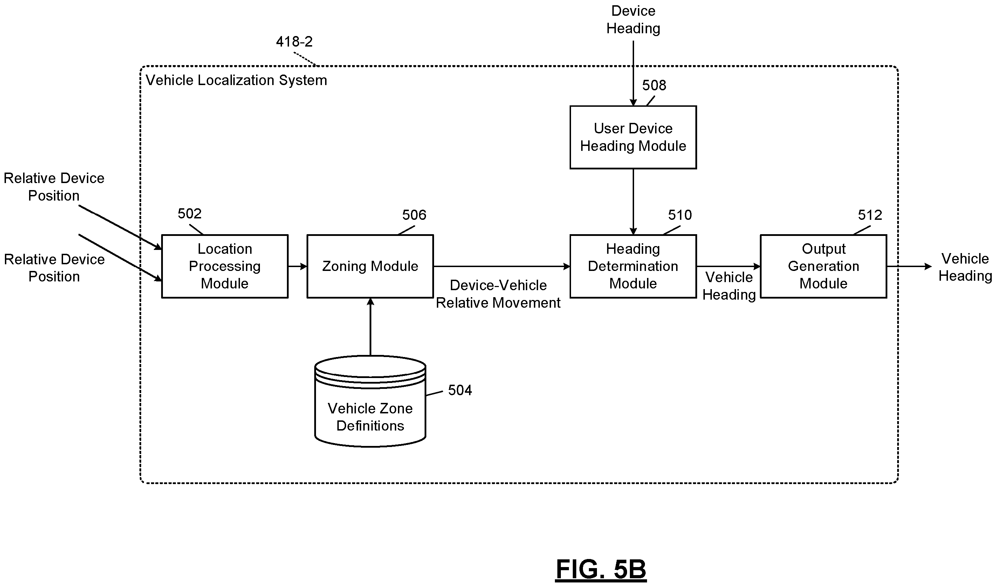

FIG. 5B is a block diagram of another example implementation of the vehicle localization system 418 (i.e., vehicle localization system 418-2) for determining vehicle heading according to aspects of the present disclosure. The vehicle localization system 418-2 is configured to receive relative device position information from the first vehicle access module 414 and the second vehicle access module 416, and the device heading information from the vehicle communication module 412. The vehicle localization system 418-2 and/or components thereof are configured to use the inputs to determine the vehicle heading of the vehicle 112. The vehicle localization system 418-2 may include one or more of the location processing module 502, a zoning module 506, a vehicle zone definitions datastore 504, the user device heading module 508, the heading determination module 510, and the output generation module 512. The location processing module 502, the user device heading module 508 and the output generation module 512 are the same or substantially similar to those described with respect to the vehicle localization system 418-1 of FIG. 5A.

The zoning module 506 may receive the device movement from the location processing module 502 and determine one or more vehicle zones that the user device 120 is located within or transitions through while approaching the vehicle 112. The zoning module 506 may receive and/or obtain vehicle zone definitions from the vehicle zone definitions datastore 504 describing the plurality of vehicle zones around the vehicle. The zoning module 506 may be configured to extrapolate the device movement to predict a device path for the user device 120 to the vehicle. The zoning module 506 can then determine the one or more vehicle zones that the user device 120 will pass through based on the device path and the vehicle zone definitions. The zoning module 506 may provide the determined one or more vehicle zone(s) to the heading determination module 510 as device-vehicle relative movement to determine the vehicle heading for the vehicle 112.

The heading determination module 510 may receive the repeated heading information from the user device heading module 508 and the device-vehicle relative movement including the predicted one or more zones from the zoning module 506. The heading determination module 510 can determine the vehicle heading based on the repeated heading information (i.e., a set of headings over time received prior to the determination) and the predicted one or more zones.

The output generation module 512 may use the vehicle heading determined by the heading determination module 510 for processing and conversion to a required format (e.g., compass, degrees, etc.) usable by the navigation system 440 and/or the autonomous driving system 450.

### PROCESS FLOWCHARTS

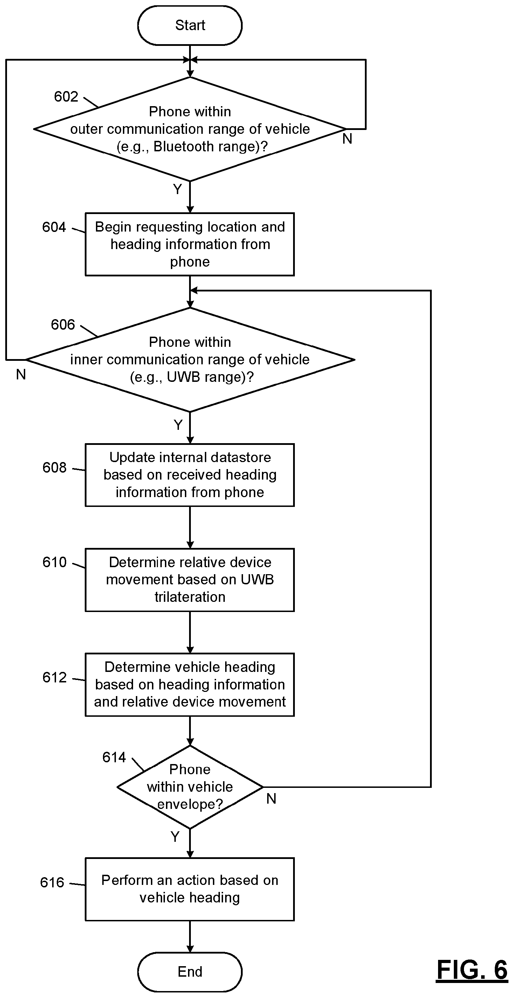

In FIG. 6, processing - for example, by the vehicle 112 - of a vehicle heading request begins at 602. At 602, control determines whether a phone is within an outer communication range of the vehicle. If so, control transfers to 604; otherwise control remains at 602. The outer communication range may be an area surrounding the vehicle defined by an outer radial distance from a point on the vehicle. The outer communication range can be predefined or can be the activation range of a transceiver (e.g., BLE transceiver).

At 604, control begins requesting location and heading information from the phone. For example, control may request, from a first communication module 428, locations and headings of the phone over time (e.g., every 1000 milliseconds, every 100 milliseconds, etc.). Control moves to 606. At 606, control determines whether the phone is within an inner communication range of the vehicle. If so, control transfers to 608; otherwise control transfers back to 602. The inner communication range may be an area surrounding the vehicle defined by a radial distance from a point on the vehicle, where the inner radial distance is shorter than that of the outer communication range. The inner communication range can be predefined or can be the activation range of a transceiver (e.g., BLE, UWB, etc.).

At 608, control updates an internal datastore based on the received heading information from the phone. For example, a datastore of the vehicle 112 may have previously stored phone heading information that must be replaced with the new heading information. Additionally, the phone headings may be added to the datastore such that they are associated with respective times the headings were calculated. Control moves to 610.

At 610, control determines a device movement indicating where the phone is located/approaching from relative to the vehicle based on the UWB trilateration. For example, the movement processing module 514 may determine an angle of movement of the user device 120 relative to a known axis of the vehicle 112 based on the phone movement determined by trilaterating the relative phone positions at multiple times relative to the first vehicle access module 414. Control then moves to 612.

At 612, control determines a vehicle heading based on the relative device movement and the phone heading information. For example, heading determination module 510 may determine the vehicle heading of the vehicle 112 based on the device movement/angle of movement and the phone heading information including one or more phone headings received over time. Control moves to 614.

At 614, control determines whether the phone is within the vehicle envelope. For example, the vehicle localization system 418 may determine that the user device 120 is within the vehicle 112 or within a keyless entry range of the vehicle 112. If so, control moves to 616, otherwise control moves to 606. At 616, control performs an action based on the vehicle heading. For example, the navigation system 440 may determine a routing direction and time for navigating the vehicle 112 to a desired location. Control ends at 616.

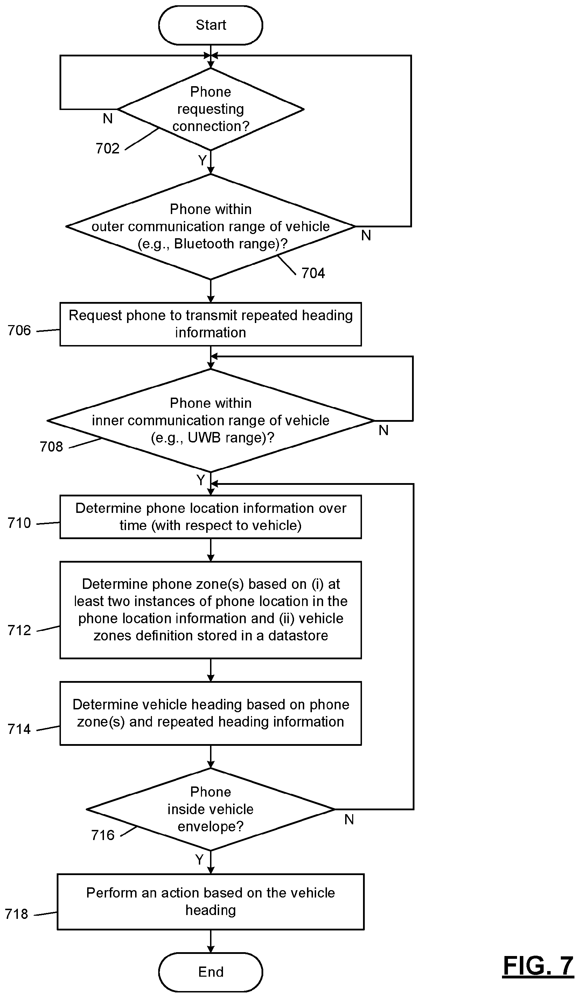

In FIG. 7, processing - for example by the vehicle 112 - of a vehicle heading request begins at 702. At 702, control determines whether a phone is requesting connection. If so, control transfers to 704; otherwise control remains at 702. For example, the vehicle communication module 412 may receive a connection request from the first communication module 428 of the user device 120 (i.e., phone).

At 704, control determines whether the phone is within an outer communication range of the vehicle. If so, control transfers to 706; otherwise control returns to 702. The outer communication range may be an area surrounding the vehicle defined by an outer radial distance from a point on the vehicle. The outer communication range can be predefined or can be the activation range of a transceiver (e.g., BLE transceiver).

At 706, control requests repeated heading information from the phone over time. For example, control may request, from the first communication module 428, locations and headings of the phone over time (e.g., every 1000 milliseconds, every 100 milliseconds, etc.). Control moves to 708.

At 708, control determines whether the phone is within an inner communication range of the vehicle. If so, control transfers to 710; otherwise control remains at 708. The inner communication range may be an area surrounding the vehicle defined by a radial distance from a point on the vehicle, where the inner radial distance is shorter than that of the outer communication range. The inner communication range can be predefined or can be the activation range of a transceiver (e.g., BLE, UWB, etc.).

At 710, control determines phone location information over time with respect to the vehicle. For example, one or more of the first vehicle access module 414 and/or the second vehicle access module 416 may determine locations (e.g., positions) of the phone at multiple times based on the ToF with the second communication module 432 of the phone. Then, control moves to 712.

At 712, control determines phone zone(s) based on (i) at least two instances of phone location in the continuous location information and (ii) vehicle zones definitions stored in a datastore. For example, the zoning module 506 may determine one or more vehicle zones that the phone is located within or will be approaching the vehicle 112 from based on the phone movement determined by triangulating the relative phone positions at multiple times relative to the first vehicle access module 414 and vehicle zones definitions stored in vehicle zone definitions datastore 504. Control then moves to 714.

At 714, control determines vehicle heading based on the phone zone(s) and the repeated heading information. For example, heading determination module 510 may determine the vehicle heading of the vehicle 112 based on the vehicle zone(s) and the phone heading information including repeated phone headings received over time. Control moves to 716.

At 716, control determines whether the phone is inside the vehicle envelope. For example, the vehicle localization system 418 may determine that the user device 120 is within the vehicle 112 or within a keyless entry range of the vehicle 112. If so, control moves to 718, otherwise control moves to 708. At 718, control performs an action based on the vehicle heading. For example, the navigation system 440 may determine a routing direction and time for navigating the vehicle 112 to a desired location. Control ends at 718.

### CONCLUSION

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. In the written description and claims, one or more steps within a method may be executed in a different order (or concurrently) without altering the principles of the present disclosure. Similarly, one or more instructions stored in a non-transitory computer-readable medium may be executed in a different order (or concurrently) without altering the principles of the present disclosure. Unless indicated otherwise, numbering or other labeling of instructions or method steps is done for convenient reference, not to indicate a fixed order.

Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Spatial and functional relationships between elements (for example, between modules, circuit elements, semiconductor layers, etc.) are described using various terms, including "connected," "engaged," "coupled," "adjacent," "next to," "on top of," "above," "below," and "disposed." Unless explicitly described as being "direct," when a relationship between first and second elements is described in the above disclosure, that relationship encompasses a direct relationship where no other intervening elements are present between the first and second elements as well as an indirect relationship where one or more intervening elements are present between the first and second elements.

As noted below, the term "set" generally means a grouping of one or more elements. However, in various implementations a "set" may, in certain circumstances, be the empty set (in other words, the set has zero elements in those circumstances). As an example, a set of search results resulting from a query may, depending on the query, be the empty set. In contexts where it is not otherwise clear, the term "non-empty set" can be used to explicitly denote exclusion of the empty set - that is, a non-empty set will always have one or more elements.

A "subset" of a first set generally includes some of the elements of the first set. In various implementations, a subset of the first set is not necessarily a proper subset: in certain circumstances, the subset may be coextensive with (equal to) the first set (in other words, the subset may include the same elements as the first set). In contexts where it is not otherwise clear, the term "proper subset" can be used to explicitly denote that a subset of the first set must exclude at least one of the elements of the first set. Further, in various implementations, the term "subset" does not necessarily exclude the empty set. As an example, consider a set of candidates that was selected based on first criteria and a subset of the set of candidates that was selected based on second criteria; if no elements of the set of candidates met the second criteria, the subset may be the empty set. In contexts where it is not otherwise clear, the term "non-empty subset" can be used to explicitly denote exclusion of the empty set.

In the figures, the direction of an arrow, as indicated by the arrowhead, generally demonstrates the flow of information (such as data or instructions) that is of interest to the illustration. For example, when element A and element B exchange a variety of information but information transmitted from element A to element B is relevant to the illustration, the arrow may point from element A to element B. This unidirectional arrow does not imply that no other information is transmitted from element B to element A. Further, for information sent from element A to element B, element B may send requests for, or receipt acknowledgements of, the information to element A.

In this application, including the definitions below, the term "module" can be replaced with the term "controller" or the term "circuit." In this application, the term "controller" can be replaced with the term "module." The term "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); processor hardware (shared, dedicated, or group) that executes code; memory hardware (shared, dedicated, or group) that is coupled with the processor hardware and stores code executed by the processor hardware; other suitable hardware components that provide the described functionality; or a combination of some or all of the above, such as in a system-on-chip.

The module may include one or more interface circuits. In some examples, the interface circuit(s) may implement wired or wireless interfaces that connect to a local area network (LAN) or a wireless personal area network (WPAN). Examples of a LAN are Institute of Electrical and Electronics Engineers (IEEE) Standard 802.11-2020 (also known as the WIFI wireless networking standard) and IEEE Standard 802.3-2018 (also known as the ETHERNET wired networking standard). Examples of a WPAN are IEEE Standard 802.15.4 (including the ZIGBEE standard from the ZigBee Alliance) and, from the Bluetooth Special Interest Group (SIG), the BLUETOOTH wireless networking standard (including Core Specification versions 3.0, 4.0, 4.1, 4.2, 5.0, and 5.1 from the Bluetooth SIG).

The module may communicate with other modules using the interface circuit(s). Although the module may be depicted in the present disclosure as logically communicating directly with other modules, in various implementations the module may actually communicate via a communications system. The communications system includes physical and/or virtual networking equipment such as hubs, switches, routers, and gateways. In some implementations, the communications system connects to or traverses a wide area network (WAN) such as the Internet. For example, the communications system may include multiple LANs connected to each other over the Internet or point-to-point leased lines using technologies including Multiprotocol Label Switching (MPLS) and virtual private networks (VPNs).

In various implementations, the functionality of the module may be distributed among multiple modules that are connected via the communications system. For example, multiple modules may implement the same functionality distributed by a load balancing system. In a further example, the functionality of the module may be split between a server (also known as remote, or cloud) module and a client (or, user) module. For example, the client module may include a native or web application executing on a client device and in network communication with the server module.

Some or all hardware features of a module may be defined using a language for hardware description, such as IEEE Standard 1364-2005 (commonly called "Verilog") and IEEE Standard 1076-2008 (commonly called "VHDL"). The hardware description language may be used to manufacture and/or program a hardware circuit. In some implementations, some or all features of a module may be defined by a language, such as IEEE 1666-2005 (commonly called "SystemC"), that encompasses both code, as described below, and hardware description.

The term code, as used above, may include software, firmware, and/or microcode, and may refer to programs, routines, functions, classes, data structures, and/or objects. Shared processor hardware encompasses a single microprocessor that executes some or all code from multiple modules. Group processor hardware encompasses a microprocessor that, in combination with additional microprocessors, executes some or all code from one or more modules. References to multiple microprocessors encompass multiple microprocessors on discrete dies, multiple microprocessors on a single die, multiple cores of a single microprocessor, multiple threads of a single microprocessor, or a combination of the above.

The memory hardware may also store data together with or separate from the code. Shared memory hardware encompasses a single memory device that stores some or all code from multiple modules. One example of shared memory hardware may be level 1 cache on or near a microprocessor die, which may store code from multiple modules. Another example of shared memory hardware may be persistent storage, such as a solid state drive (SSD) or magnetic hard disk drive (HDD), which may store code from multiple modules. Group memory hardware encompasses a memory device that, in combination with other memory devices, stores some or all code from one or more modules. One example of group memory hardware is a storage area network (SAN), which may store code of a particular module across multiple physical devices. Another example of group memory hardware is random access memory of each of a set of servers that, in combination, store code of a particular module. The term memory hardware is a subset of the term computer-readable medium.

The apparatuses and methods described in this application may be partially or fully implemented by a special-purpose computer created by configuring a general-purpose computer to execute one or more particular functions embodied in computer programs. Such apparatuses and methods may be described as computerized or computer-implemented apparatuses and methods. The functional blocks and flowchart elements described above serve as software specifications, which can be translated into the computer programs by the routine work of a skilled technician or programmer.

The computer programs include processor-executable instructions that are stored on at least one non-transitory computer-readable medium. The computer programs may also include or rely on stored data. The computer programs may encompass a basic input/output system (BIOS) that interacts with hardware of the special-purpose computer, device drivers that interact with particular devices of the special-purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation), (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective-C, Swift, Haskell, Go, SQL, R, Lisp, Java^{®}, Fortran, Perl, Pascal, Curl, OCaml, JavaScript^{®}, HTML5 (Hypertext Markup Language 5th revision), Ada, ASP (Active Server Pages), PHP (PHP: Hypertext Preprocessor), Scala, Eiffel, Smalltalk, Erlang, Ruby, Flash^{®}, Visual Basic^{®}, Lua, MATLAB, SIMULINK, and Python^{®}.

The term non-transitory computer-readable medium does not encompass transitory electrical or electromagnetic signals propagating through a medium (such as on a carrier wave). Non-limiting examples of a non-transitory computer-readable medium are nonvolatile memory circuits (such as a flash memory circuit, an erasable programmable read-only memory circuit, or a mask read-only memory circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The term "set" generally means a grouping of one or more elements. The elements of a set do not necessarily need to have any characteristics in common or otherwise belong together. The phrase "at least one of A, B, and C" should be construed to mean a logical (A OR B OR C), using a non-exclusive logical OR, and should not be construed to mean "at least one of A, at least one of B, and at least one of C." The phrase "at least one of A, B, or C" should be construed to mean a logical (A OR B OR C), using a non-exclusive logical OR.

## Claims

1. A heading determination system for determining heading of a vehicle, the heading determination system comprising:
a connection module configured to receive device heading information from a user device, wherein the device heading information indicates a direction of movement of the user device;
a movement determination module configured to, based on location information of the user device measured by the vehicle, determine a relative device movement, wherein the relative device movement indicates a direction of movement of the user device relative to the vehicle; and
a localization module configured to:
determine the heading of the vehicle based on the device heading information and the relative device movement, and
transmit the heading of the vehicle to a control module of the vehicle to perform an action.

2. The heading determination system of claim 1, wherein:
the device heading information is defined with respect to at least one of magnetic north and true north; and
the heading of the vehicle is defined with respect to at least one of the magnetic north and the true north.

3. The heading determination system of claim 1, wherein:
the relative device movement of the user device includes a current zone of a plurality of zones around the vehicle; and
the current zone indicates an area outside of the vehicle that the user device is located within.

4. The heading determination system of claim 3, wherein zones of the plurality of zones are at least one of:
non-overlapping; or
sectors of a circle having a center at a point of the vehicle.

5. The heading determination system of claim 3, wherein:
the movement determination module is configured to identify a prior zone of the plurality of zones for the user device based the location information of the user device;
the prior zone indicates an area outside of the vehicle that the user device was located within prior to entering the current zone;
the localization module is configured to determine the heading of the vehicle based on the device heading information and a movement direction of the user device; and
the movement direction is calculated based on the prior zone and the current zone.

6. The heading determination system of claim 1, wherein:
the location information includes a plurality of user device locations at a corresponding plurality of times; and
the device heading information includes a plurality of user device headings at the corresponding plurality of times.

7. The heading determination system of claim 1, wherein the relative device movement is an angle of movement of the user device relative to a specified axis of the vehicle.

8. The heading determination system of claim 7, wherein the movement determination module is configured to trilaterate at least two locations of the user device at two times relative to a known point on the vehicle to determine the direction of movement of the user device.

9. The heading determination system of claim 8, wherein:
the movement determination module is configured to trilaterate the at least two locations of the user device and the known point on the vehicle using law of cosines; and
the specified axis of the vehicle passes through a center point of the vehicle and points in a forward direction relative to the vehicle.

10. The heading determination system of claim 1, wherein the connection module includes a Bluetooth transceiver configured to receive the device heading information from the user device.

11. The heading determination system of claim 1, wherein the location information of the user device is measured by radio frequency communication between the user device and a transceiver of the vehicle.

12. The heading determination system of claim 11, wherein the transceiver includes an ultra-wideband transceiver.

13. The heading determination system of claim 11, wherein the movement determination module is configured to determine the relative device movement for the user device in response to the user device being within a threshold distance of the transceiver.

14. The heading determination system of claim 1, wherein the movement determination module is configured to determine the relative device movement based on radio frequency communications between the user device and a corresponding plurality of transceivers of the vehicle.

15. The heading determination system of claim 1, wherein the control module includes at least one of:
a navigation module configured to determine a navigation path for the vehicle based on the heading of the vehicle; or
an autonomous driving module configured to plan a driving path for the vehicle based on the heading of the vehicle.

16. The heading determination system of claim 1, wherein the localization module is configured to determine the heading of the vehicle based on (i) an orientation of the vehicle relative to a fixed beacon and (ii) a known position of the fixed beacon.

17. A method for determining heading of a vehicle, the method comprising:
receiving device heading information from a user device, wherein the device heading information indicates a direction of movement of the user device;
based on location information of the user device measured by the vehicle, determining a relative device movement, wherein the relative device movement indicates a direction of movement of the user device relative to the vehicle;
determining the heading of the vehicle based on the device heading information and the relative device movement; and
transmitting the heading of the vehicle to a control module of the vehicle to perform an action.

18. The method of claim 17, wherein the relative device movement includes at least one of:
a current zone of a plurality of zones around the vehicle; or
an angle of movement of the user device relative to an axis of the vehicle.

19. A non-transitory computer-readable medium comprising instructions including:
receiving device heading information from a user device, wherein the device heading information indicates a direction of movement of the user device;
based on location information of the user device measured by a vehicle, determining a relative device movement, wherein the relative device movement indicates a direction of movement of the user device relative to the vehicle;
determining heading of the vehicle based on the device heading information and the relative device movement; and
transmitting the heading of the vehicle to a control module of the vehicle to perform an action.

20. The non-transitory computer-readable medium of claim 19, wherein the instructions include trilaterating at least two locations of the user device at two times relative to the vehicle to determine the direction of movement of the user device.
